(19) Europäisches Patentamt

European Patent Office

Office européen des brevets

(11) Veröffentlichungsnummer: **0 288 870 B1**

# (12) EUROPÄISCHE PATENTSCHRIFT

(45) Veröffentlichungstag der Patentschrift:
**31.07.91 Patentblatt 91/31**

(21) Anmeldenummer: **88106185.7**

(22) Anmeldetag: **19.04.88**

(51) Int. Cl.⁵ : **A23N 12/08**

(54) Kaffeebohnenröster.

(30) Priorität: **28.04.87 DE 3714594**

(43) Veröffentlichungstag der Anmeldung:
**02.11.88 Patentblatt 88/44**

(45) Bekanntmachung des Hinweises auf die
Patenterteilung:
**31.07.91 Patentblatt 91/31**

(84) Benannte Vertragsstaaten:
**AT BE CH DE ES FR GB GR IT LI LU NL SE**

(56) Entgegenhaltungen:
**WO-A-84/01271**
**DE-A- 2 531 390**
**DE-A- 3 217 055**
**DE-A- 3 437 432**
**US-A- 4 494 314**

(73) Patentinhaber: **NOVOPAK MASCHINENBAU GMBH**
**Holsteinstrasse 10**
**W-2362 Wahlstedt (DE)**

(72) Erfinder: **Munk, Harald**
**Rathausmarkt 1d**
**W-2406 Stockelsdorf (DE)**

(74) Vertreter: **Meyer, Ludgerus**
**Patentanwälte Meyer, Stach, Vonnemann**
**Jungfernstieg 38**
**W-2000 Hamburg 36 (DE)**

## Beschreibung

Die Erfindung betrifft einen Kaffeebohnenröster für kleine Mengen mit einer vertikal gerichteten zylindrischen Röstkammer, einem Gebläse zur Luftzufuhr in die Röstkammer zum Durchwirbeln von in die Röstkammer eingeführten Kaffeebohnen, einer Ansaugöffnung zum Ansaugen von Zuluft und einer Abluftöffnung, der eine Abscheideeinrichtung für mit der Abluft transportierte Kaffeebohnenreste vorgeschaltet ist, sowie einer Heizeinrichtung im Zuluftkanal. Ein derartiges Gerät ist aus der DE-A-3217055 Gekannt.

Zur Entwicklung der Geschmacks- und Aromastoffe in grünen Kaffeebohnen ist es notwendig, diese zu rösten, bevor sie für die Kaffeeherstellung mit heißem Wasser aufgebrüht werden können. Die Qualität des fertigen Kaffees ist wesentlich dadurch bestimmt, wie lang der Zeitraum zwischen Röstung und Herstellen des Kaffeegetränks gewählt ist. Es ist daher wünschenswert, den Röstvorgang erst unmittelbar vor Auslieferung des Kaffees an den Endverbraucher vorzunehmen.

Zu diesem Zweck sind bereits Röstautomaten bekannt geworden, die für kleine Mengen, von z.B. 250-1.000 g vorgesehen sind. Damit besteht einerseits die Möglichkeit, diese Röstautomaten auch im Einzelhandel zu verwenden und andererseits dem Kunden nach Wunsch verschiedene Kaffeemischungen anbieten zu können.

Aus der DE-PS 2531390 ist ein Kaffeebohnenröster bekannt, bei dem eine von einem Gehäuse umschlossene Röstkammer mit perforiertem Boden vorgesehen ist, durch den erhitzte Röstluft von einem Gebläse von unten in die Röstkammer eingeblasen wird, so daß die in der Röstkammer vorhandenen Bohnen eine Durchwirbelung erfahren, indem sie entlang einer Wand emporgehoben werden und auf der gegenüberliegenden Wand wieder herunterfallen. Dieses zylinderförmige Durchwirbeln der zu röstenden grünen Kaffeebohnen bewirkt, daß alle Kaffeebohnen von allen Seiten und gleichmäßig geröstet werden.

Zum Kühlen der gerösteten Kaffeebohnen ist bei dieser Einrichtung ein zusätzliches Gebläse vorgesehen, das die Kaffeebohnen mit Umgebungsluft durchwirbelt und dadurch abkühlt. Die Anlage ist konstruktiv sehr aufwendig ausgeführt und daher für kleinere Röstmengen nicht wirtschaftlich.

Aus der WO 84/01271 ist ein anderer Kaffeebohnenröster bekannt, der unterhalb eines Zuluftplenums eine zylindrische Röstkammer aufweist, in der eingefüllte Kaffeebohnen durch einen Luftstrahl in eine torroidale Bewegung versetzt werden, der aus einem koaxial zur Röstkammer angeordneten Einblasrohr in die Röstkammer einbläst. Der Luftstrom zum Rösten der Kaffeebohnen wird von einem ersten Gebläse erzeugt. Ein zweites Gebläse dient zur Kühlung der gerösteten Kaffeebohnen. Diese Einrichtung ist ebenfalls konstruktiv sehr aufwendig ausgebildet, so daß das Rösten kleinerer Mengen in der Regel wesentlich höhere Kosten verursacht als eine fabrikmäßige Röstung.

Ausgehend von der DE-OS 3217055 liegt der Erfindung die Aufgabe zugrunde, einen vereinfachten Kaffeebohnenröster anzugeben, der zum Rösten und zum Abkühlen der Kaffeebohnen lediglich ein einziges Gebläse erfordert, der konstruktiv einfach aufgebaut ist, bei dem der Röstverlauf jedoch ein gleichmäßiges Röstergebnis bewirkt, und der flexibel steuerbar ist.

Diese Aufgabe wird durch die in den Ansprüchen angegebene Erfindung gelöst. Vorteilhafte Weiterbildungen der Erfindung sind in Unteransprüchen angegeben.

Der Kaffeebohnenröster nach der Erfindung ist im Prinzip in der Weise aufgebaut, daß die Zuluft von oben über mehrere Einlaßkanäle in die Röstkammer eingeführt wird und koaxial wieder nach oben abgeführt wird.

Der Kaffeebohnenröster weist dazu eine zylindrisch vertikal gerichtete Röstkammer auf, die so ausgebildet ist, daß die in die Röstkammer von oben eingeblasene Heißluft außermittig über mindestens zwei gegen den Boden der Röstkammer gerichtete Einblaskanäle zugeführt wird, deren Ausblasrichtung gegenüber der Röstkammerachse um einen jeweils gleichsinnigen Ausblaswinkel zwischen 0 und 30° in Tangentialrichtung der Röstkammer angestellt ist.

Die Kaffeebohnen werden oberhalb der Röstkammer durch einen absperrbaren Kaffeebohneneinlaß in die Röstkammer eingefüllt. An der Unterseite der Röstkammer ist ein zu öffnender Boden vorgesehen, durch den die gerösteten Kaffeebohnen aus der Röstkammer in einen darunter angeordneten Auffangbehälter herausfallen können, dessen luftdurchlässiger Boden gleichzeitig die Ansaugöffnung zum Ansaugen der Zuluft bildet.

Diese Anordnung der Erfindung vermeidet, daß ein zusätzlicher Lüfter für den Kühlbetrieb erforderlich ist. Die bereits gerösteten Kaffeebohnen können damit unmittelbar durch die Ansaugluft des Zuluftkanals gekühlt werden. Es ist auch möglich, bereits während der Kühlung einer Charge Kaffee eine nächste Charge zu rösten.

Der erfindungsgemäße Kaffeebohnenröster ist einfach aufgebaut. Es sind lediglich einfache von Hand oder durch eine Programmautomatik betätigbare Steuer- und Schalteinrichtungen zur Absperrung des Kaffeebohneneinlasses, zur Öffnung des Bodens der Röstkammer sowie zur Steuerung von Luftzufuhr, Temperatur und Röst- bzw. Kühldauer erforderlich. Die Einrichtung nach der Erfindung kann als Tischgerät aufgebaut sein, wobei gleichwohl innerhalb kürzester Zeit die Röstung einer Charge Kaffee in einer Größe von etwa 500-600 g möglich ist.

Die Erfindung wird nachstehend anhand eines Ausführungsbeispiels näher erläutert. Es zeigen

Fig. 1    eine Prinzipdarstellung der Erfindung,
Fig. 2    eine Vorderansicht einer ausgeführten Anordnung nach der Erfindung,
Fig. 3    eine perspektivische Ansicht einer ausgeführten Anordnung,
Fig. 4    eine Seitenansicht einer Anordnung von Fig. 2 und 3,
Fig. 5    eine Aufsicht auf eine erfindungsgemäße Anordnung.

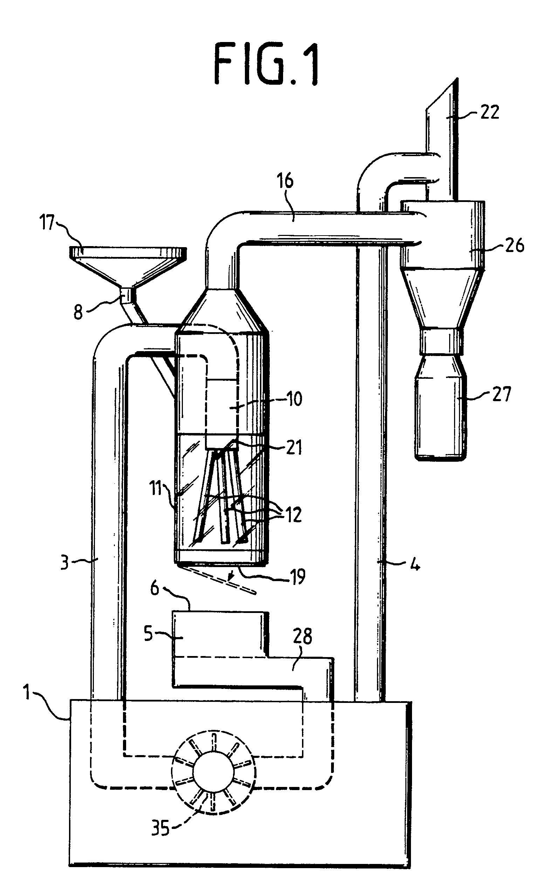

Fig. 1 zeigt eine schematische Ansicht der erfindungsgemäßen Einrichtung. Die Zuluft wird über die Ansaugöffnung 6 und dem Zuluftkanal 28 zum Gebläse 35 geführt, das vorzugsweise als Ringverdichter ausgebildet ist. Von dort gelangt die Zuluft über die rohrförmige Säule 3 zur Röstkammer 11. Am oberen Ende der Röstkammer 11 befindet sich im Zuluftkanal die Heizung 10. Unmittelbar im Anschluß an die Heizung 10 ist ein Verteiler 21 vorgesehen, der die erhitzte Zuluft auf Einblaskanäle 12 verteilt, deren offenes Ende gegen den Boden 19 der Röstkammer gerichtet ist. In der Röstkammer 11 werden die eingefüllten Kaffeebohnen durchwirbelt. Die Abluft wird koaxial um die Heizung und das Ende des Zuluftkanals herum über den Kanal 16 zum Zyklon 26 geleitet, in dem die Abluft von Kaffeebohnenresten, wie Häutchen, Röstspetzen, Stäuben usw. befreit wird. Die Reste fallen dabei in den Sammelbehälter 27. Die gereinigte Abluft verläßt den Zyklon über die zentrale Abluftöffnung 22.

Unterhalb des Bodens 19 der Röstkammer 11 befindet sich der Aufnahmebehälter 5, in den die fertig gerösteten Bohnen nach Öffnen des Bodens 19 hineinfallen können. Während die Bohnen geröstet werden, wird die Zuluft über den siebartigen Boden des Behälters 5 und den kanal 28 angesaugt. Nachdem die Bohnen in den Behälter 5 hineingefallen sind, wird die Zuluft unmittelbar durch die Bohnen hindurch angesaugt, so daß diese dabei gekühlt werden. Es ist daher kein eigenes Kühlgebläse erforderlich.

Wenn während des Kühlens einer Kaffeebohnencharge bereits eine neue Charge geröstet wird, kann der Energieverbrauch der Einrichtung erheblich gesenkt werden. Es ist auch möglich, während des Kühlens einer Kaffeebohnencharge die Heizung 10 zumindest zeitweise abzuschalten.

Bei der erfindungsgemäßen Einrichtung wird zur Röstung und zur Kühlung der gleiche Zyklonabscheider verwendet, so daß die Reste der Kaffeebohnen in beiden Betriebsarten im gleichen Sammelbehälter aufgefangen werden können, ohne daß eine Abgabe an die Umgebung erfolgt. Zur Kühlung sind daher keine zusätzlichen Filter- oder Abscheideeinrichtungen erforderlich.

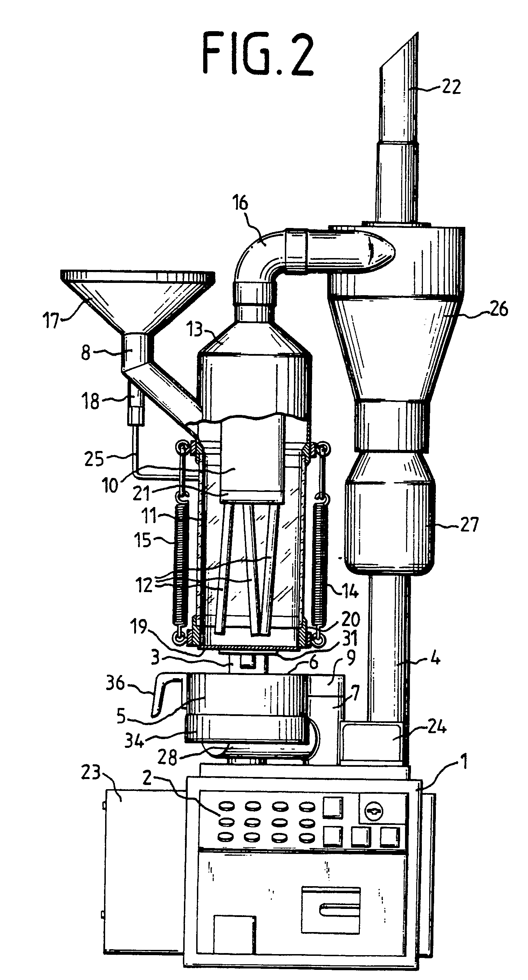

Fig. 2 zeigt die erfindungsgemäße Einrichtung in Vorderansicht. Die wesentlichen Teile der Einrichtung sind auf einem Grundkörper 1 aufgebaut, der auf der Vorderseite ein Bedienfeld 2 für Einstellungen, Schalter sowie Anzeigeelemente aufweist. An der Seite des Grundkörpers 1 ist ein Gehäuseansatz 23 angeordnet, der zur Aufnahme von Steuerungseinheiten dient und der für den Servicefall leicht von Grundkörper 1 abnehmbar ist. Im Inneren des Grundkörpers befindet sich u.a. das Gebläse. An der Oberseite des Grundkörpers können weitere Bedienelemente 24 vorgesehen sein.

An der rückwärtigen Seite des Grundkörpers 1 befinden sich zwei vertikal gerichtete Säulen 3 und 4, an denen die wesentlichen Teile der Einrichtung befestigt sind. Die Säule 3 bildet dabei gleichzeitig den Zuluftkanal, der an der Abgangsseite des Gebläses im Grundkörper 1 angeschlossen ist.

Der Zuluftkanal 3 führt vom Grundkörper ausgehend nach oben und dann über ein horizontal nach vorn gerichtetes Ansatzstück radial in die Röstkammerhalterung 13. An das Ende des Zuluftkanals schließt sich der Heizungsbereich 10 an, in dem die Zuluft bis zur Rösttemperatur aufgeheizt wird. Die Heizung 10 befindet sich im wesentlichen zentral innerhalb der Röstkammerhalterung 13. Unmittelbar im Anschluß an die Heizung ist ein Verteiler 21 angeordnet, in dem die aufgeheizte Luft auf wenigstens zwei Ausblaskanäle 12 aufgeteilt wird. In bevorzugter Ausgestaltung der Erfindung sind drei Ausblaskanäle 12 vorgesehen.

Die Ausblaskanäle 12 sind nach unten in die eigentliche Röstkammer 11 gegen deren Boden gerichtet. Deren Öffnung weist vom Boden der Röstkammer 11 einen Abstand von vorzugsweise 0,5 bis 3 cm auf. Die Einlaßkanäle sind außermittig angeordnet, wobei die Ausblasrichtung der einzelnen Ausblaskanäle gegenüber der Röstammerachse um einen jeweils gleichsinnigen Ausblaswinkel zwischen 0 und 30°, vorzugsweise etwa 15° in Tangentialrichtung der Röstkammer angestellt ist. Neben der Winkeleinstellung in Tangentialrichtung können die Ausblasrohre auch in einem kleinen Winkel von maximal 20° gegen die Radialrichtung nach außen oder innen angestellt sein. Die Ausblaskanäle können entweder unmittelbar vom Verteiler ausgehend in dem genannten Winkel ausgerichtet sein, sie können jedoch auch zunächst vertikal herabgeführt sein und erst im unteren Bereich in dem gewünschten Winkel abgeknickt sein. Anstelle oder ergänzend zur winkelmäßigen Anstellung der Enden der Ausblasrohre 12 kann auch die Ausblasebene der Ausblaskanäle in einem Winkel derart angeschnitten sein, daß eine angenommene Normale auf die Ausblasebene einen Winkel mit der Längsachse des Ausblasrohrs aufweist, der maximal 30° beträgt.

Die dargestellte Anordnung der Ausblasrohre gewährleistet, daß die in die Röstkammer 11 eingeführten

3

Kaffeebohnen nicht nur durch die eingeblasene Heißluft in der Schwebe gehalten werden, sondern gleichzeitig durchwirbelt werden, wobei sie in ihrer Gesamtheit den Ort innerhalb der Röstkammer ständig wechseln. Während der gesamten Röstzeit laufen die einzelnen Bohnen mehrfach um eine vertikale Achse herum, so daß sich keine Einblaslücken ergeben und eine hohe Gleichmäßigkeit des Röstergebnisses erzielt wird.

Die grünen Kaffeebohnen werden in die Röstkammer über den Einfülltrichter 17 eingeführt. Dieser mündet in einen Einlaßstutzen 8, durch den die Kaffeebohnen in die Röstkammer 11 fallen. Zum Absperren der Öffnung ist ein Ventil vorgesehen, das durch ein Ventilbetätigungsglied 18 absperrbar ist. Das Ventil wird vorzugsweise über einen durch eine Leitung 25 geführten Bowdenzug betätigt. Vorzugsweise ist das Ventil als kolbenförmiges mit seitlichen Öffnungen versehenes oben geschlossenes im Einlaufstutzen 8 engsitzendes Ventil ausgebildet, das zur Öffnung soweit in den trichterförmigen Einlaß angehoben wird, daß die Kaffeebohnen durch die seitlichen Öffnungen in den Einlaßstutzen einlaufen können.

Da sich die Heizung und damit der Zuluftkanal zentral innerhalb der Röstkammerhalterung 13 befinden, kann die aus der Röstkammer 11 abgeführte Abluft koaxial um die Heizung 13 herum noch oben durch den Abluftkanal 16 zum Zyklon 26 abgeführt werden. In dem Zyklon 26 wird die Abluft von den Röstresten befreit, die dann in den Auffangbehälter 27 fallen, während die gereinigte Abluft über die Abluftöffnung 22 an die Raumluft abgegeben wird. Der Zyklon wird über Streben 39 und 33 von der Säule 4 getragen.

Die zylindrische Röstkammer 11 besteht vorzugsweise aus einem Glaszylinder, um den Röstvorgang sichtbar machen zu können. Der Glaskörper ist über einen Ringhalter 20, der den unteren Rand des Glaskörpers abstützt, über Federn 14 und 15 mit der Röstkammerhalterung 13 verbunden. Der Boden 19 der Röstkammer besteht aus einer Platte, die im geschlossenen Zustand gegen den Ringhalter 20 andrückt.

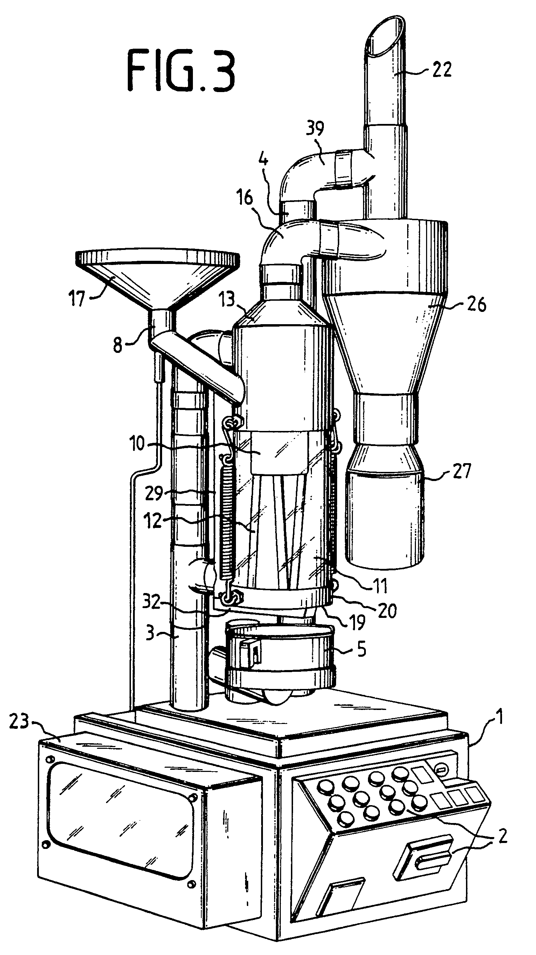

Fig. 3 zeigt zur besseren Verdeutlichung eine perspektivische Gesamtansicht der Einrichtung nach der Erfindung.

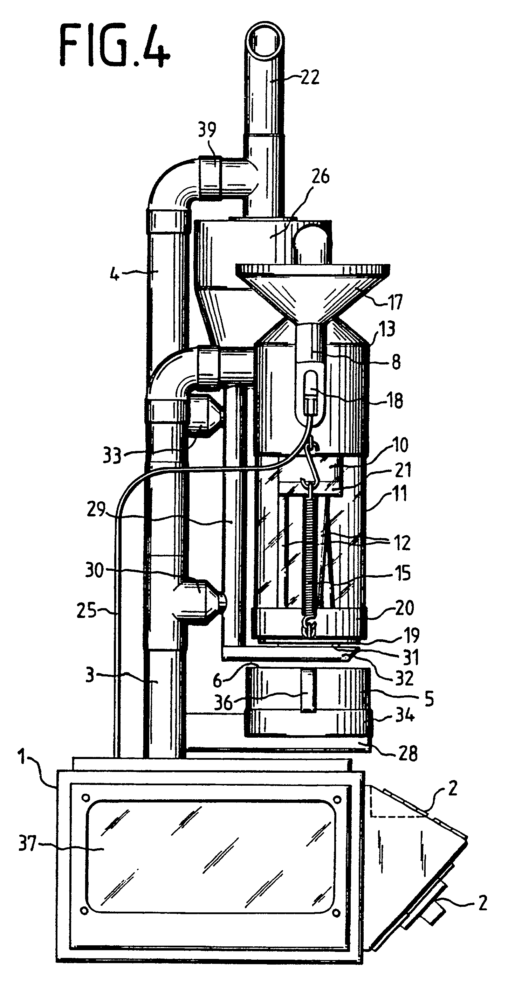

Fig. 4 zeigt eine Seitenansicht einer erfindungsgemäßen Einrichtung. In dem Grundkörper 1 ist ein seitliches Fenster 37 vorgesehen, um, insbesondere für den Service, die Stellung innerhalb des Gehäuses angeordneter Regler bzw. Schalteinrichtungen schnell feststellen zu können.

An der rückwärtigen Seite des Grundkörpers 1 sind die Säulen 3 und 4 angeordnet, die vertikal nach oben verlaufen. Die Säule 3 dient gleichzeitig als Zuluftkanal zur Zuführung von Gebläseluft zur Röstkammer. Die Säule 4 und deren obere waagerecht verlaufende Strebe 39 dient im wesentlichen der Halterung des Zyklons 26.

Es ist ein Halter 29 vorgesehen, der über eine Strebe 30 mit der Säule 3 verbunden ist. Am unteren Ende des Halters 29 ist eine Andruckplatte 32 vorgesehen, die auf ihrer Oberseite ein Kugel-Lager 31 trägt, an dem der Boden 19 befestigt ist. Beim Andrücken der Andruckplatte 32 gegen den Ringhalter 20 kann damit gewährleistet werden, daß der Boden 19 auf jeden Fall ohne Versatzprobleme den Boden der Röstkammer 11 einwandfrei abdichtet. Die Betätigung der Andruckplatte 32 erfolgt mit einer nicht dargestellten Hebeleinrichtung, die vorzugsweise durch einen Bowdenzug betätigt wird, der von einem Stellmotor innerhalb des Grundkörpers 1 betätigt wird.

Beim Öffnen des Bodens 19 werden die in der Röstkammer 11 gerösteten Kaffeebohnen in den unterhalb der Röstkammer angeordneten Aufnahmebehälter 5 überführt. Der Aufnahmebehälter 5 ist als topfförmiger Behälter mit einem siebartigen Boden ausgebildet, der über einen Griff 36 von dem Halter 34 abnehmbar ist. Der Halter 34 befindet sich am vorderen offenen Ende des Zulaufkanals 28, der die Einlaßseite des im Grundkörper 1 angeordneten Gebläses bildet.

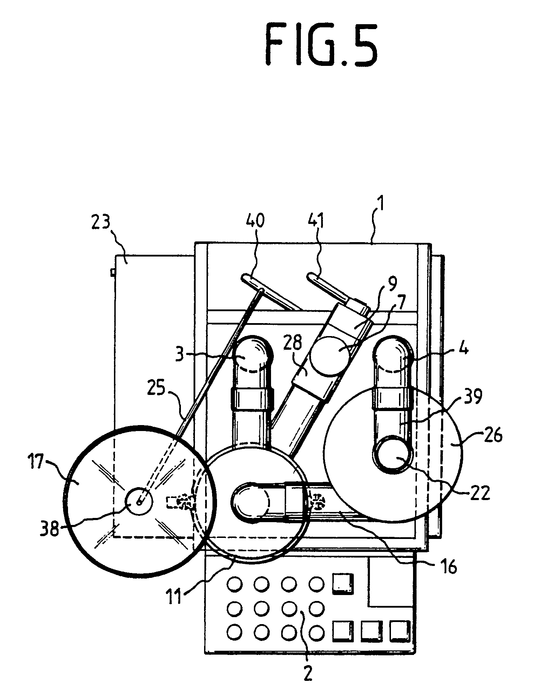

Fig. 5 zeigt eine Aufsicht auf die erfindungsgemäße Anordnung. Es sind deutlich die zwei Säulen 3 und 4 zu erkennen, zwischen denen eine weitere dritte Säule 7 angeordnet ist. Die dritte Säule 7 trägt lediglich den Zuluftkanal 28 und weist im Übergang zwischen der Säule 7 und dem Zuluftkanal 28 ein Ventil 9 auf, das zur Steuerung des Volumenstroms der Zuluft dient. Das Ventil 9 ist über ein Betätigungsorgan 41, das vorzugsweise von einem Stellmotor innerhalb des Grundkörpers 1 betätigt wird, steuerbar. Zur Voreinstellung einer maximalen Zuluftmenge ist das Ventil mit einem Voreinstellventil gekoppelt, das insbesondere als angeschnittene Rohrdurchführung ausgebildet sein kann, in dem das eigentliche Einstellventil angeordnet ist.

Die Steuerung der Einrichtung erfolgt im wesentlichen über die Temperatur der Röstluft und die Zeitdauer der Röstung bzw. Kühlung. Sobald die Röstzeit beendet ist, wird das Zuluftventil über das Betätigungsorgan 41 abgesperrt, um die Durchwirbelung der Kaffeebohnen in der Röstkammer zu beenden. Dann erfolgt die Öffnung des Bodens 19 der Röstkammer und die Kaffeebohnen fallen in den Aufnahmebehälter 5. Sobald der Boden der Röstkammer wieder geschlossen ist, kann auch das Zuluftventil wieder geöffnet werden, so daß jetzt der Kühlbetrieb einsetzt. Nach Beendigung der Kühlphase kann der Aufnahmebehälter 5 von dem Halter 29 entfernt werden. Zur Einführung der Kaffeebohnen über den Einfülltrichter 17 wird das Zuluftventil ebenfalls geschlossen, um zu vermeiden, daß Abluft durch den Einfülltrichter 17 entweicht.

Sämtliche Steuerungsvorgänge können nach einer einmal am Bedienfeld 2 eingestellten Temperatur-Zeiteinstellung selbsttätig durchgeführt werden. Es ist daher keine besondere Überwachung der Einrichtung notwendig. Es ist darauf hinzuweisen, daß bereits während der Kühlung einer Charge von Kaffeebohnen eine neue Charge geröstet werden kann.

**Bezugszeichenliste**

| | |
|---|---|
| 1 | Grundkörper |
| 2 | Bedienfeld |
| 3 | erste Säule |
| 4 | zweite Säule |
| 5 | Aufnahmebehälter |
| 6 | Ansaugöffnung |
| 7 | dritte Säule |
| 8 | Einlaufstutzen |
| 9 | Zuluftventil |
| 10 | Heizung |
| 11 | Röstkammer |
| 12 | Einblaskanäle |
| 13 | Röstkammerhalterung |
| 14 | Feder |
| 15 | Feder |
| 16 | Abluftkanal |
| 17 | Einfülltrichter |
| 18 | Ventilbetätigung |
| 19 | Boden |
| 20 | Ringhalter |
| 21 | Verteiler |
| 22 | Abluftöffnung |
| 23 | Gehäuseansatz |
| 24 | Bedienfeld |
| 25 | Leitung |
| 26 | Zyklon |
| 27 | Sammelbehälter |
| 28 | Zuluftkanal |
| 29 | Halter |
| 30 | Strebe |
| 31 | Lager |
| 32 | Andruckplatte |
| 33 | Strebe |
| 34 | Halter |
| 35 | Gebläse |
| 36 | Griff |
| 37 | Fenster |
| 38 | Einlaß |
| 39 | Strebe |
| 40 | Betätigungsorgan |
| 41 | Betätigungsorgan |

**Patentansprüche**

1. Kaffeebohnenröster für kleine Mengen mit einer vertikal gerichteten zylindrischen Röstkammer (11), einem Gebläse (35) zur Luftzufuhr in die Röstkammer (11) zum Durchwirbeln von in die Röstkammer eingeführten Kaffeebohnen, einer Ansaugöffnung (6) zum Ansaugen von Zuluft und einer Abluftöffnung (22), der eine Abscheideeinrichtung (26) für mit der Abluft transportierte Kaffeebohnenreste vorgeschaltet ist, sowie einer Heizeinrichtung (10) im Zuluftkanal, dadurch gekennzeichnet, daß die in die Röstkammer (11) von oben eingeblasene Heißluft außermittig über wenigstens zwei gegen den Boden (19) der Röstkammer gerichtete Einblaskanäle (12) zugeführt wird, deren Ausblasrichtung gegenüber der Röstkammerachse um einen jeweils gleichsinnigen Ausblaswinkel zwischen 0 und 30° in Tangentialrichtung der Röstkammer angestellt ist.

2. Kaffeebohnenröster nach Anspruch 1, dadurch gekennzeichnet, daß die Ausblaskanäle (12) von einem am oberen Ende der Röstkammer angeordneten Luftverteiler (21) ausgehend im Ausblaswinkel gegen den Boden der Röstkammer gerichtet sind.

3. Kaffeebohnenröster nach Anspruch 1, dadurch gekennzeichnet, daß die Ausblaskanäle (12) von einem am oberen Ende der Röstkammer angeordneten Luftverteiler (21) ausgehend im wesentlichen parallel zur Röstkammerachse verlaufen und daß das untere Ende der Ausblaskanäle in Ausblasrichtung abgeknickt ist.

4. Kaffeebohnenröster nach Anspruch 2 oder 3, dadurch gekennzeichnet, daß das untere Ende der Einblaskanäle (12) derart angeschnitten ist, daß die angenommene Normale auf die Auslaßebene gegenüber der Einblaskanalachse um einen Winkel von 0-30° angestellt ist.

5. Kaffeebohnenröster nach einem der Ansprüche 1-4, dadurch gekennzeichnet, daß die Einblaskanäle (12) in Radialrichtung in einem Winkel von 0-20° gegenüber der Röstkammerachse angewinkelt sind.

6. Kaffeebohnenröster nach Anspruch 2 oder 3, dadurch gekennzeichnet, daß der Luftverteiler (21) am Ende des Zuluftkanals angeschlossen ist, daß die Heizung (10) sich unmittelbar vor dem Luftverteiler (21) im Zuluftkanal befindet und daß die Abluft aus der Röstkammer koaxial um den Zuluftkanal und die Heizung herum abgeführt wird.

7. Kaffeebohnenröster mit einer vertikal gerichteten zylindrischen Röstkammer (11), einem Gebläse (35) zur Luftzufuhr in die Röstkammer zum Durchwirbeln von in die Röstkammer eingeführten Kaffeebohnen, einer Ansaugöffnung (6) zum Ansaugen von Zuluft und einer Abluftöffnung (22), der eine Abscheideeinrichtung (26) für mit der Abluft transportierte Kaffeebohnenreste vorgeschaltet ist, einer Heizeinrichtung (10) im Zuluftkanal einem zu öffnenden Boden (19), durch den die gerösteten Kaffeebohnen aus der Röstkammer (11) herausfallen können, sowie einem Auffangbehälter (5) für die Kaffeebohnen unterhalb der Röstkammer (11), dessen luftdurchlässiger Boden die Ansaugöffnung zum Ansaugen der Zuluft bildet, dadurch gekennzeichnet, daß die Zuluft über einen zentralen Zuluftkanal der Röstkammer (11) von oben zugeführt wird, daß die Abluft aus der Röstkammer koaxial um den Zuluftkanal und die Heizung (10) herum nach oben abgeführt wird, daß ein absperrbarer Kaffeebohneneinlaß (17) oberhalb der Röstkammer angeordnet ist, von dem die Kaffeebohnen durch den Abluftkanal in die Röstkammer gelangen.

8. Kaffeebohnenröster nach Anspruch 7, dadurch gekennzeichnet, daß der Boden (19) über eine Andruckplatte (32) an die Röstkammer (11) angedrückt wird.

9. Kaffeebohnenröster nach Anspruch 7, dadurch gekennzeichnet, daß an der Ansaugöffnung (6) des Zuluftkanals (28) eine lösbare Halterung (34) zur Aufnahme des abnehmbaren Auffangbehälters (5) angeordnet ist.

10. Kaffeebohnenröster nach Anspruch 7, dadurch gekennzeichnet, daß die Abscheideeinrichtung (26) ein Zyklonabscheider ist, an dessen Unterseite ein lösbarer Sammelbehälter (27) angeordnet ist.

11. Kaffeebohnenröster nach Anspruch 7, dadurch gekennzeichnet, daß der Zuluftkanal (28) ein Einlaßventil (9) zur Steuerung des Durchflußvolumens der Zuluft aufweist.

12. Kaffeebohnenröster nach Anspruch 11, dadurch gekennzeichnet, daß im Zuluftkanal ein Grundeinstellventil vorgesehen ist, das das maximale Durchflußvolumen der Zuluft begrenzt.

13. Kaffeebohnenröster nach Anspruch 7, dadurch gekennzeichnet, daß der Kaffeebohneneinlaß ein sperrbares Einfüllventil aufweist.

14. Kaffeebohnenröster nach Anspruch 13, dadurch gekennzeichnet, daß das Einfüllventil in Form eines mit wenigstens einer seitlichen Öffnung versehenen Hohlkolbens ausgebildet ist, der in einem Einlaufstutzen (8) des Kaffeebohneneinlasses engpassend eingesetzt ist und zur Öffnung soweit aus dem Einlaßstutzen (8) in die trichterförmige Einfüllöffnung (17) anhebbar ist, daß darin eingefüllte Kaffeebohnen nach Öffnung des Ventils durch die seitliche Öffnung in den Einlaufstutzen (8) und von dort über den Abluftkanal in die Röstkammer (11) gelangen.

15. Kaffeebohnenröster nach einem oder mehreren der vorhergehenden Ansprüche dadurch gekennzeichnet, daß ein Grundkörper (1) zur Aufnahme des Gebläses (35) und einer zentralen Schalt- und Steuereinrichtung vorgesehen ist, daß an dem Grundkörper (1) eine erste im wesentlichen senkrecht angeordnete Säule (3) vorgesehen ist, die an ihrem oberen um etwa 90° abgeknickte Ende die Röstkammer (11) trägt, daß an dem Grundkörper (1) eine zweite im wesentlichen senkrecht und parallel zur ersten Säule (3) angeordnete zweite Säule (4) vorgesehen ist, die an ihrem oberen Ende die Abscheideeinrichtung (26) trägt, und daß die Ansaugöffnung (6) am Ende eines waagerecht angeordneten Kanals (28) angeordnet ist, der über eine senkrecht angeordnete Säule (7) mit dem Grundkörper (1) verbunden ist.

16. Kaffeebohnenröster nach Anspruch 15, dadurch gekennzeichnet, daß der waagerecht angeordnete Kanal (28) mit einer dritten senkrecht angeordneten Säule (7) verbunden ist.

17. Kaffeebohnenröster nach Anspruch 15, dadurch gekennzeichnet, daß der waagerecht angeordnete Kanal (28) mit der zweiten senkrecht angeordneten Säule (4) verbunden ist.

18. Kaffeebohnenröster nach Anspruch 15, dadurch gekennzeichnet, daß die erste Säule (3) als an das Gebläse (35) angeschlossener Zuluftkanal zur Röstkammer ausgebildet ist, und daß der waagerecht angeordnete Kanal (28) einen an den Eingang des Gebläses (35) angeschlossenen Einlaßkanal bildet.

19. Kaffeebohnenröster nach Anspruch 18 und 11, dadurch gekennzeichnet, daß das Ventil im Übergang zwischen dem waagerecht angeordneten Kanal (28) und der senkrecht angeordneten Säule vorgesehen ist.

20. Kaffeebohnenröster nach Anspruch 19, dadurch gekennzeichnet, daß das Einlaßventil durch Verschwenken des waagerecht angeordneten Kanals (28) betätigbar ist, wobei das Einlaßventil geschlossen ist, wenn sich die Ansaugöffnung unterhalb der Röstkammer befindet.

21. Kaffeebohnenröster nach den Ansprüchen 11, 13 und 15 dadurch gekennzeichnet, daß das Einfüllventil, das Einlaßventil sowie der Boden (19) der Röstkammer (11) durch die zentrale Schalt- und Steuereinrichtung betätigbar sind.

22. Kaffeebohnenröster nach Anspruch 15, dadurch gekennzeichnet, daß der Abluftauslaß (22) der Röstkammer über einen im wesentlichen waagerecht verlaufenden Kanal (39) tangential mit dem Zyklonabscheider (26) verbunden ist.

## Claims

1. Coffee-bean roaster for small quantities, with a vertically directed cylindrical roasting chamber (11), with a fan (35) for supplying air into the roasting chamber (11) for the swirling of coffee beans introduced into the roasting chamber, with an intake port (6) for the intake of supply air and with a spent-air port (22) preceded by a separator device (26) for coffee-bean residues transported together with the spent air, as well as with a heeting device (10) in the supply-air channel, characterised in that the hot air blown into the roasting chamber (11) from above is supplied eccentrically by way of at least two blowing-in channels (12) which are directed towards the bottom (19) of the roasting chamber and the blowing-out direction of which is set respectively at an equidirectional blowing-out angle of between 0 and 30° relative to the roasting-chamber axis in the tangential direction of the roasting chamber.

2. Coffee-bean roaster according to Claim 1, characterised in that the blowing-out channels (12) are directed towards the bottom of the roasting chamber at the blowing-out angle from an air distributor (21) arranged at the upper end of the roasting chamber.

3. Coffee-bean roaster according to Claim 1, characterised in that the blowing-out channels (12) extend essentially parallel to the roasting-chamber axis from an air distributor (21) arranged at the upper end of the roasting chamber, and in that the lower end of the blowing-out channels is bent in the blowing-out direction.

4. Coffee-bean roaster according to Claim 2 or 3, characterised in that the lower end of the blowing-in channels (12) is chamfered in such a way that the assumed perpendicular to the outlet plane is set at an angle of 0 to 30° relative to the blowing-in channel axis.

5. Coffee-bean roaster according to one of Claims 1 to 4, characterised in that the blowing-in channels (12) are angled in the radial direction relative to the roasting-chamber axis at an angle of 0 to 20°.

6. Coffee-bean roaster according to Claim 2 or 3, characterised in that the air distributor (21) is connected to the end of the supply-air channel, in that the heating device (10) is located immediately in front of the air distributor (21) in the supply-air channel, and in that the spent air is discharged from the roasting chamber coaxially about the supply-air channel and about the heating device.

7. Coffee-bean roaster with a vertically directed cylindrical roasting chamber (11), with a fan (35) for supplying air into the roasting chamber for the swirling of coffee beans introduced into the roasting chamber, with an intake port (6) for the intake of supply air and with a spent-air port (22) preceded by a separator device (26) for coffee-bean residues transported together with the spent air, with a heating device (10) in the supply-air channel, with an openable bottom (19), through which the roasted coffee beans can fall out of the roasting chamber (11), as well as with a collecting container (5) for the coffee beans which is located underneath the roasting chamber (11) and the air-permeable bottom of which forms the intake port for the intake of the supply air, characterised in that the supply air is supplied to the roasting chamber (11) from above via a central supply-air channel, in that the spent air is discharged upwards from the roasting chamber coaxially about the supply-air channel and about the heating device (10), and in that arranged above the roasting chamber is a closable coffee-bean inlet (17), from which the coffee beans pass through the spent-air channel into the roasting chamber.

8. Coffee-bean roaster according to Claim 7, characterised in that the bottom (19) is pressed against the roasting chamber (11) via a pressure plate (32).

9. Coffee-bean roaster according to Claim 7, characterised in that a reseable mounting (34) for receiving the removable collecting container (5) is arranged at the intake port (6) of the supply-air channel (28).

10. Coffee-bean roaster according to Claim 7, characterised in that the separator device (26) is a cyclone separator, on the underside of which a reseable collecting vessel (27) is arranged.

11. Coffee-bean roaster according to Claim 7, characterised in that the supply-air channel (28) has an inlet valve (9) for controlling the throughflow volume of the supply air.

12. Coffee-bean roaster according to Claim 11, characterised in that in the supply-air channel there is a basic-setting valve which limits the maximum throughflow volume of the supply air.

13. Coffee-bean roaster according to Claim 7, characterised in that the coffee-bean inlet has a closable filling valve.

14. Coffee-bean roaster according to Claim 13, characterised in that the filling valve is designed in the form of a hollow piston which is equipped with at least one lateral orifice and is inserted with a close fit in an inflow connection (8) of the coffee-bean inlet and which, for opening, can be lifted so far out of the inflow connection (8) into the funnel-shaped filling orifice (17), that, after the opening of the valve, coffee beans introduced into it pass through the lateral orifice into the inflow connection (8) and from there via the spent-air channel into the roasting chamber (11).

15. Coffee-bean roaster according to one or more of the preceding claims, characterised in that a basic body (1) is provided for receiving the fan (35) and a central switching and control device, in that on the basic body (1) there is a first essentially vertically arranged column (3) which carries the roasting chamber (11) at its upper end bent at approximately 90°, in that on the basic body (1) there is a second column (4) which is arranged essentially vertically and parallel to the first column (3) and which at its upper end carries the separator device (26), and in that the intake port (6) is located at the end of a horizontally arranged channel (28) which is connected to the basic body (1) via a vertically arranged column (7).

16. Coffee-bean roaster according to Claim 15, characterised in that the horizontally arranged channel (28) is connected to a third vertically arranged column (7).

17. Coffee-bean roaster according to Claim 15, characterised in that the horizontally arranged channel (28) is connected to the second vertically arranged column (4).

18. Coffee-bean roaster according to Claim 15, characterised in that the first column (3) is designed as a supply-air channel connected to the fan (35) and leading to the roasting chamber and, in that the horizontally arranged channel (28) forms an inlet channel connected to the entrance of the fan (35).

19. Coffee-bean roaster according to Claims 18 and 11, characterised in that the valve is provided at the transition between the horizontally arranged channel (28) and the vertically arranged column.

20. Coffee-bean roaster according to Claim 19, characterised in that the inlet is actuatable by a pivoting of the horizontally arranged channel (28), the inlet valve being closed when the intake port is located underneath the roasting chamber.

21. Coffee-bean roaster according to Claims 11, 13 and 15, characterised in that the filing valve, the inlet valve and the bottom (19) of the roasting chamber (11) are actuable by means of the central switching and control device.

22. Coffee-bean roaster according to Claim 15, characterised in that the spent-air outlet (22) of the roasting chamber is connected tangentially to the cyclone separator (26) via a channel (39) extending essentially horizontally.


## Revendications

1. Torréfacteur à café pour petites quantités, comportant une chambre de torréfaction (11) cylindrique orientée verticalement, unesoufflerie (35) pour amener dans ladite chambre de torréfaction (11) de l'air destiné à faire tourbillonner des grains de café introduits dans la chambre de torréfaction, une ouverture d'aspiration (6) pour aspirer de l'air d'admission, une ouverture d'évacuation d'air (22) en amont de laquelle est prévu un dispositif séparateur (26) pour les restes de grains de café transportés par l'air sortant, et un dispositif de chauffage (10) prévu dans le canal d'amenée d'air, caractérisée en ce que l'air chaud injectée par le haut dans la chambre de torréfaction (11) est amené de façon excentrique par l'intermédiaire d'au moins deux canaux d'injection (12) qui sont orientés vers le fond (19) de la chambre de torréfaction et dont les directions d'éjection respectives sont réglés par rapport à l'axe de la chambre de torréfaction à un angle d'éjection de même sens, compris entre 0 et 30° dans le sens tangentiel de la chambre de torréfaction.

2. Torréfacteur à café selon la revendication 1, caractérisé en ce que les canaux d'éjection (12) sont dirigés, à partir d'un diffuseur d'air (21) disposé à l'extrémité supérieure de la chambre de torréfaction, vers le fond de celle-ci, suivant l'angle d'éjection.

3. Torréfacteur à café selon la revendication 1, caractérisé en ce que les canaux d'éjection (12) sont sensiblement parallèles à l'axe de la chambre de torréfaction, à partir d'un diffuseur d'air (21) disposé à l'extrémité supérieure de la chambre de torréfaction, et en ce que l'extrémité inférieure desdits canaux d'éjection est repliée dans le sens de l'éjection.

4. Torréfacteur à café selon la revendication 2 ou 3, caractérisée en ce que l'extrémité inférieure des canaux

8

d'injection (12) est taillée de telle sorte que la normale supposée au plan d'émission est réglée suivant un angle de 0 à 30° par rapport à l'axe de canal d'injection.

5. Torréfacteur à café selon l'une quelconque des revendications 1 à 4, caractérisé en ce que les canaux d'injection (12) sont coudés par rapport à l'axe de la chambre de torréfaction, dans le sens radial, suivant un angle de 0 à 20°.

6. Torréfacteur à café selon la revendication 2 ou 3, caractérisé en ce que le diffuseur d'air (21) est relié à l'extrémité du canal d'amenée d'air, en ce que le chauffage (10) se trouve juste avant le diffuseur d'air (21) dans le canal d'amenée d'air, et en ce que l'air sortant est évacué de la chambre de torréfaction coaxialement autour du canal d'amenée d'air et du chauffage.

7. Torréfacteur à café comportant une chambre de torréfaction (11) cylindrique orientée verticalement, une soufflerie (35) pour amener dans ladite chambre de torréfaction de l'air destiné à faire tourbillonner des grains de café introduits dans la chambre de torréfaction, une ouverture d'aspiration (6) pour aspirer de l'air d'admission, une ouverture d'évacuation d'air (22) en amont de laquelle est prévu un dispositif séparateur (26) pour les restes de grains de café transportés par l'air sortant, un dispositif de chauffage (10) prévu dans le canal d'amenée d'air, un fond ouvrant (19) par lequel les grains de café torréfiés peuvent tomber de la chambre de torréfaction (11) et un récipient collecteur (5) pour les grains de café, qui est situé au-dessous de la chambre de torréfaction et dont le fond perméabl e à l'air forme l'ouverture d'aspiration destinée à aspirer l'air d'amenée, caractérisé en ce que l'air est amené par le haut, par un canal d'amenée central de la chambre de torréfaction (11), en ce que l'air sortant est évacué de la chambre de torréfaction par le haut, coaxialement autour du canal d'amenée d'air et du chauffage (10), et en ce qu'il est prévu, au-dessus de la chambre de torréfaction, une ouverture d'admission de grains de café verrouillable (17) à partir de laquelle les grains de café arrivent dans la chambre de torréfaction à travers le canal d'air sortant.

8. Torréfacteur à café selon la revendication 7, caractérisé en ce que le fond (19) est pressé contre la chambre de torréfaction (11) par l'intermédiaire d'une plaque de pression (32).

9. Torréfacteur à café selon la revendication 7, caractérisé en ce qu'il est prévu, au niveau de l'ouverture d'aspiration (6) du canal d'ameée d'air (28), une fixation amovible (34) pour recevoir le récipient collecteur (5) démontable.

10. Torréfacteur à café selon la revendication 7, caractérisé en ce que le dispositif séparateur (26) est un séparateur à cyclone sur la face inférieure duquel est disposé un récipient collecteur amovible (27).

11. Torréfacteur à café selon la revendication 7, caractérisé en ce que le canal d'amenée d'air (28) possède une soupape d'admission (9) pour régler le volume d'écoulement de l'air amenée.

12. Torréfacteur à café selon la revendication 11, caractérisé en ce qu'il est prévu, dans le canal d'amenée d'air, une soupape de réglage de base qui limite le volume d'écoulement maximal de l'air amené.

13. Torréfacteur à café selon la revendication 7, caractérisé en ce que l'ouverture d'admission de grains de café possède une soupape de remplissage verrouillable.

14. Torréfacteur à café selon la revendication 13, caractérisé en ce que la soupape de remplissage est conçue sous la forme d'un piston creux, pourvu d'au moins un orifice latéral, qui est inséré de façon étroitement ajustée dans une tubulure d'entrée (8) de l'ouverture d'admission de grains de café et qui, en vue de l'ouverture, est apte à être relevé hors de ladite tubulure d'entrée (8) dans l'ouverture de remplissage (17) en forme d'entonnoir jusqu'à ce que des grains de café versés dans celui-ci arrivent par l'orifice latéral dans la tubulure d'entrée (8), après ouverture de la soupape, et, de là, dans la chambre de torréfaction (11) par le canal d'air sortant.

15. Torréfacteur à café selon l'une au moins des revendications précédentes, caractérisé en ce qu'il est prévu un corps de base (1) pour loger la soufflerie (35) et un dispositif central de commutation et de commande, en ce qu'il est prévu, au niveau du corps de base (1), une première colonne qui est disposée essentiellement verticalement et qui porte, à son extrémité supérieure coudée à environ 90°, la chambre de torréfacton (11), en ce qu'il est prévu, au niveau du corps de base (1), une seconde colonne (4) qui est disposée essentiellement verticalement et parallèlement à la première colonne (3) et qui porte, à son extrémité supérieure, le dispositif séparateur (26), et en ce que l'ouverture d'aspiration (6) est placée à l'extrémité d'un canal (28) qui est disposé horizontalement et qui est relié au corps de base (1) par une colonne (7) disposée verticalement.

16. Torréfacteur à café selon la revendication 15, caractérisé en ce que le canal (28) disposé horizontalement est relié à une troisième colonne (7) disposée verticalement.

17. Torréfacteur à café selon la revendication 15, caractérisé en ce que le canal (28) disposé horizontalement est relié à la seconde colonne (4) disposée verticalement.

18. Torréfacteur à café selon la revendication 15, caractérisé en ce que la première colonne (3) est conçue comme un canal d'amenée d'air vers la chambre de torréfaction, relié à la soufflerie (35), et en ce que le canal (28) disposé horizontalement forme un canal d'entrée relié à l'entrée de la soufflerie (35).

19. Torréfacteur à café selon les revendications 18 et 11, caractérisé en ce que la soupape est prévue dans la zone de transition entre le canal (28) disposé horizontalement et la colonne disposée verticalement.

20. Torréfacteur à café selon la revendication 19, caractérisé en ce que la soupape d'admission est apte à être actionnée par un pivotement du canal (28) disposé horizontalement, ladite soupape d'admission étant fermée quand l'ouverture d'aspiration se trouve au-dessous de la chambre de torréfaction.

21. Torréfacteur à café selon les revendications 11, 13 et 15, caractérisé en ce que la soupape de remplissage, la soupape d'admission et le fond (19) de la chambre de torrefaction (11) sont aptes à être actionnés grâce au dispositif de commutation et de commande central.

22. Torréfacteur à café selon la revendication 15, caractérisé en ce que l'ouverture d'évacuation d'air sortant (22) de la chambre de torréfaction est reliée de façon tangentiellement au séparateur à cyclone (26) par un canal (39) s'étendant essentiellement horizontalement.

# FIG.1

# FIG.2

# FIG.3

# FIG.4

# FIG.5